# EUROPEAN PATENT APPLICATION

(11) **EP 4 815 529 A1**
(43) Date of publication of application: **30.09.2026**
(21) Application number: 23959095.3
(22) Date of filing: 20.11.2023
(51) Int. Cl.: H04W 8/24

(54) **METHOD AND APPARATUS FOR ACQUIRING CAPABILITY INFORMATION, METHOD AND APPARATUS FOR SENDING CAPABILITY INFORMATION, AND COMMUNICATION SYSTEM**

(71) Applicant: 1FINITY INC., Kawasaki-shi, Kanagawa 211-8588 (JP)
(72) Inventor: GENG, Tingting, Beijing 100022 (CN)
(74) Representative: Haseltine Lake Kempner LLP
(86) International application number: PCT/CN2023/132701
(87) International publication number: WO 2025/107119

(57) **Abstract**

Embodiments of this disclosure provide methods and apparatuses for acquiring and transmitting capability information and a communication system. The apparatus for acquiring capability information is applicable to a first network device, and includes a first processor, the first processor controlling the first network device to perform the following operations: transmitting a first request message, the first request message being used to indicate required artificial intelligence-related capability information of a terminal equipment; and receiving the required artificial intelligence-related capability information of the terminal equipment.

## Description

### Technical Field

This disclosure relates to the field of communication technologies.

### Background

In the field of communication technologies, multiple scenarios or sub-scenarios are defined in an artificial intelligence/machine learning (AI/ML) project, such as channel state information (CSI) enhancement, beam management, positioning, or other scenarios. Different scenarios or sub-scenarios may correspond to one or more features/feature groups (FGs). Application of AI/ML to the above feature/FGs is referred to as AI/ML-based/enabled features/FGs. An AI/ML-based/enabled feature/FG may correspond to one or more AI functionalities and/or one or more AI models, wherein one AI functionality may correspond to one or more AI models.

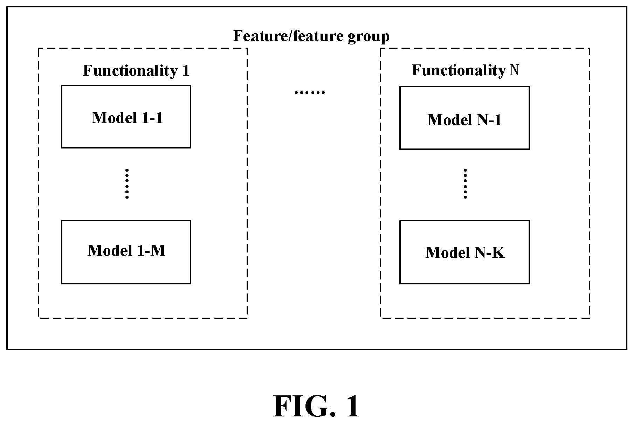

FIG. 1 is a schematic diagram of a logical relationship between a feature/feature group, an AI functionality and an AI model.

As shown in FIG. 1, in some examples, one feature/feature group (such as an AI/ML-based/enabled feature/FG) may correspond to one or more AI functionalities, such as functionality 1 to functionality N. The AI functionalities may correspond to one or more AI models, for example, functionality 1 corresponds to model 1-1 to model 1-M, and functionality N corresponds to model N-1 to model N-M.

As shown in FIG. 1, functionality 1 to functionality N correspond to frames in dotted lines, that is, in some other examples, the feature/feature group may not correspond to functionalities, but may directly correspond to model 1-1 to model 1-M. In other words, in these examples, at least one of functionality 1 to functionality N may not be present in FIG. 1.

Lifecycle management (LCM) to which an AI/ML-based/enabled feature/feature group correspond(s) may be divided into functionality-based LCM and model-ID-based LCM according to a granularity of a functionality/model-ID granularity.

The LCM may include at least one of the following: data collection, model training, model inference, model monitoring, model/functionality control, model update, model transfer/delivery, model storage, UE capability reporting, or other processes. The model/functionality control may include at least one of the following AI operations: selection, activation, deactivation, switching or change, fallback, release, or other operations of a model/functionality. The fallback refers to falling back to a mode in which AI is not applied.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary of the Disclosure

Considering that the number of AI-based features/feature groups is large and that the number of functionalities or models under each AI-based feature/feature group is also large, AI-related capability information of a terminal equipment or a network device is introduced to facilitate management of these functionalities or models.

It was found by the inventors of this disclosure that specific contents of AI-related capability information reported by a terminal equipment to a network device are not specified in the prior art. In addition, as there is a large amount of pieces of AI-related capability information and a difference between capabilities of a terminal equipment and a network device is relatively large, if the terminal equipment reports all of its AI-related capability information to the network device each time, unnecessary reporting of capability information may be caused, thereby resulting in unnecessary air-interface signaling overhead.

In view of at least one of the above problems or other similar problems, embodiments of this disclosure provide methods and apparatuses for acquiring and transmitting capability information and a communication system. In the method, according to first request information of a network device, a terminal equipment transmits AI-related capability information of the terminal equipment that is required by the network device, thereby avoiding unnecessary reporting of capability information and reducing unnecessary signaling overhead.

According to one aspect of the embodiments of this disclosure, there is provided an apparatus for acquiring capability information, applicable to a first network device, wherein the apparatus includes a first processor, the first processor controlling the first network device to perform the following operations:
transmitting a first request message, the first request message being used to indicate required artificial intelligence-related capability information of a terminal equipment; and
receiving the required artificial intelligence-related capability information of the terminal equipment.

According to another aspect of the embodiments of this disclosure, there is provided an apparatus for acquiring capability information, applicable to a second network device, characterized in that the apparatus includes a second processor, the first processor controlling the second network device to perform the following operations:
receiving first request information transmitted by the first network device, the first request information being used to indicate artificial intelligence-related capability information of a terminal equipment required by the first network device; and
transmitting the required artificial intelligence-related capability information of the terminal equipment to the first network device.

According to a further aspect of the embodiments of this disclosure, there is provided an apparatus for acquiring capability information, applicable to a terminal equipment, wherein the apparatus includes a third processor, the third processor controlling the terminal equipment to perform the following operations:
receiving first request information or second request information, the first request information being used to indicate artificial intelligence-related capability information of the terminal equipment required by the first network device, and the second request information being determined according to the first request information; and
transmitting the required artificial intelligence-related capability information of the terminal equipment.

An advantage of the embodiments of this disclosure exists in that based on the first request information of the network device, a terminal equipment transmits the AI-related capability information of the terminal equipment that is required by the network device, thereby avoiding unnecessary reporting of capability information and reducing unnecessary signaling overhead.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiments.
FIG. 1 is a schematic diagram of a logical relationship between a feature/feature group, an AI functionality and an AI model;
FIG. 2 is a schematic diagram of a communication system of an embodiment of this disclosure;
FIG. 3 is a schematic diagram of a method for acquiring capability information of an embodiment of a first aspect of this disclosure;
FIG. 4 is a schematic diagram of a method for acquiring capability information of Embodiment 1;
FIG. 5 is a schematic diagram of a first variant of the method for acquiring capability information of Embodiment 1;
FIG. 6 is a schematic diagram of a second variant of the method for acquiring capability information of Embodiment 1;
FIG. 7 is a schematic diagram of a third variant of the method for acquiring capability information of Embodiment 1;
FIG. 8 is a schematic diagram of a method for acquiring capability information of Embodiment 2;
FIG. 9 is a schematic diagram of a first variant of the method for acquiring capability information of Embodiment 2;
FIG. 10 is a schematic diagram of a second variant of the method for acquiring capability information of Embodiment 2;
FIG. 11 is a schematic diagram of a third variant of the method for acquiring capability information of Embodiment 2;
FIG. 12 is a schematic diagram of a method for acquiring capability information of an embodiment of a second aspect;
FIG. 13 is a schematic diagram of a method for acquiring capability information of an embodiment of a third aspect;
FIG. 14 is a schematic diagram of an apparatus for acquiring capability information of an embodiment of a fourth aspect;
FIG. 15 is a schematic diagram of an apparatus for acquiring capability information of an embodiment of a fifth aspect;
FIG. 16 is a schematic diagram of an apparatus for acquiring capability information of an embodiment of a sixth aspect;
FIG. 17 is a schematic diagram of a terminal equipment of an embodiment of a seventh aspect; and
FIG. 18 is a schematic diagram of a network device of an embodiment of the seventh aspect.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any level, which may, for example, include but not limited to the following communication protocols: 1G (generation), 2G, 2.5G, 2.75G, 3G, 4G, 4.5G, 5G, and New Radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a terminal supporting sidelink communication, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above.

In the following description, without causing confusion, the terms "uplink control signal" and "uplink control information (UCI)" or "physical uplink control channel (PUCCH)" are interchangeable, and terms "uplink data signal" and "uplink data information" or "physical uplink shared channel (PUSCH)" are interchangeable.

The terms "downlink control signal" and "downlink control information (DCI)" or "physical downlink control channel (PDCCH)" are interchangeable, and the terms "downlink data signal" and "downlink data information" or "physical downlink shared channel (PDSCH)" are interchangeable.

In addition, transmitting or receiving a PUSCH may be understood as transmitting or receiving uplink data carried by the PUSCH, transmitting or receiving a PUCCH may be understood as transmitting or receiving uplink information carried by the PUCCH, transmitting or receiving a PRACH may be understood as transmitting or receiving a preamble carried by the PRACH. Uplink signals may include uplink data signals and/or uplink control signals, and may also be referred to as uplink transmissions (UL transmissions) or uplink information or uplink channels. Transmitting uplink transmission on an uplink resource may be understood as transmitting the uplink transmission by using the uplink resource. Likewise, downlink data/signals/channels/information may be understood accordingly.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). Higher-layer signaling may also be, for example, medium access control (MAC) signaling, or an MAC control element (MAC CE); however, this disclosure is not limited thereto.

Scenarios in the embodiments of this disclosure shall be described below by way of examples; however, this disclosure is not limited thereto.

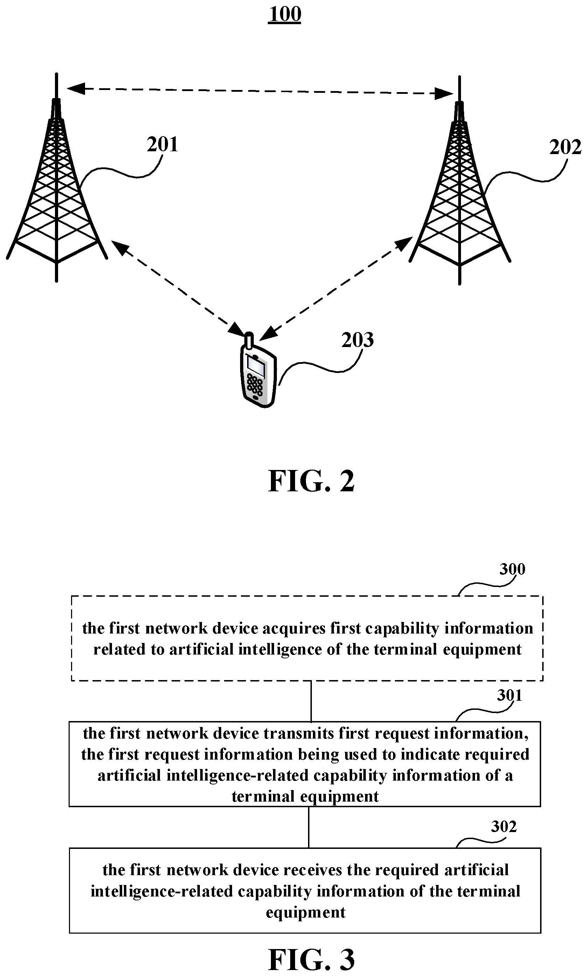

FIG. 2 is a schematic diagram of a communication system of an embodiment of this disclosure, in which a case where network devices and a terminal equipment are taken as examples is schematically shown. As shown in FIG. 2, the communication system 100 may include at least one of a first network device 201 and a second network device 202, and a terminal equipment 203 (for the sake of simplicity, an example having only one terminal equipment is schematically given in FIG. 2).

In the embodiment of this disclosure, existing services or services that may be implemented in the future may be performed between the first network device 201 and/or the second network device 202 and the terminal equipment 203. For example, such services may include but not limited to an enhanced mobile broadband (eMBB), massive machine type communication (mMTC), and ultra-reliable and low-latency communication (URLLC), etc.

Wherein, the terminal equipment 203 may transmit data to the first network device 201 and/or the second network device 202, such as in a granted or configured granted manner. The first network device 201 and/or the second network device 202 may receive data transmitted by one or more terminal equipment 203, and feed information back to the terminal equipment 203, such as acknowledgement (ACK)/non-acknowledgement (NACK) information. According to the feedback information, the terminal equipment 203 may acknowledge end of a transmission process, or may perform new data transmission, or may perform data retransmission.

Various embodiments of this disclosure may be applicable to scenarios containing network devices and/or terminal equipments, such as the scenario of the communication system shown in FIG. 2.

The first network device 201 and/or the second network device 202 may include at least one of a core network device, a third-party application device, operation administration and maintenance (OAM), and an access network device. For example, in FIG. 2, first network device 201 and/or the second network device 202 is/are access network device/access network devices.

The core network device may refer to a device in a core network (CN) providing service support to a terminal equipment. As some instances, the core network device may be at least one of the following: a mobility and management entity (MME), an access and mobility management function (AMF) entity, a session management function (SMF) entity, a user plane function (UPF) entity, and a location management function (LMF) entity, etc., which shall not be enumerated herein any further. The AMF entity may be responsible for access management and mobility management of a terminal, the SMF entity may be responsible for session management, such as establishment of a user session, and the UPF entity may be a functional entity of a user plane, and is mainly responsible for connection to external networks. It should be noted that in this disclosure, an entity may also be referred to as a network element or a functional entity, for example, the AMF entity may also be referred to as an AMF network element or an AMF functional entity.

The third-party application entity may be an OTT server (over the top server) or another third-party device.

The access network device is an access device of a terminal that accesses to a communication system in a wireless manner. The access network device may be a base station (BS), an evolved base station (evolved NodeB, eNodeB), a transmission reception point (TRP), a base station in a fifth generation (5G) mobile communication system (next generation NodeB, gNB), a base stations in a sixth generation (6G) mobile communication system, a base station in a future mobile communication system or access node in a WiFi system, etc.; the access network device may also be a module or unit that completes a part of functions of a base station, for example, it may be at least one of the following modules or units: a centralized unit (CU), a distributed unit (DU), a centralized unit control plane (CU-CP), a centralized unit user plane (CU-CP), an integrated access backhaul (IAB), or other modules or units. Specific techniques and/or specific device forms adopted by the access network device are not limited in the embodiments of this disclosure. The access network device may be deployed on the land, including indoors/outdoors, and may be handheld or on-board; and it may also be deployed on a water surface, an airplane, a balloon or a satellite. The access network device may be deployed at a fixed position or on a mobile carrier, which is not limited in the embodiments of this disclosure.

The terminal equipment (such as the terminal equipment 203 in FIG. 2) is an equipment having a function of wireless transmission and reception, and may transmit signals to the access network device and/or receive signals from the access network device. The terminal equipment may also be referred to as a terminal, a mobile station, and a mobile terminal, etc. The terminal equipment may be a mobile phone, a tablet, or other equipments having a function of wireless intelligent transmission and reception. The terminal equipment may be widely used in various scenarios, such as device-to-device (D2D), vehicle to everything (V2X) communication, machine-type communication (MTC), Internet of Things (IoT), virtual reality, augmented reality, industrial control, autonomous driving, telemedicine, or various intelligent scenarios.

Communication may be performed between the access network device and the terminal equipment and between terminal equipments via licensed spectra or via unlicensed spectra, or via licensed spectra and unlicensed spectra simultaneously. Spectrum resources used in the wireless communication are not limited in the embodiments of this disclosure.

For ease of description, following description shall be given by taking a base station serving as an access network device as an example.

In the following description of this disclosure, artificial intelligence (AI) may also be referred to as artificial intelligence/machine learning (AI/ML), and these terms are interchangeable. For example, "an AI-based feature or feature group" and "an AI-or-ML-based feature or feature group" have identical meanings, and their corresponding English words may be AI/ML-based feature/FG. For another example, artificial intelligence (AI)-related capability information may also be referred to as machine learning (ML)-related capability information or artificial intelligence or machine learning (AI/ML)-related capability information.

In following description of this disclosure, "a feature or feature group" may also be written as "a feature/feature group", they have identical meanings, and their corresponding English words may be feature/FG.

In following description of this disclosure, filter and omit have identical meanings, and they be interchangeable.

### Embodiment of a first aspect

The embodiment of the first aspect of this disclosure provides a method for acquiring capability information, applicable to a first network device, such as the first network device 201 shown in FIG. 2.

FIG. 3 is a schematic diagram of the method for acquiring capability information of the embodiment of the first aspect of this disclosure. As shown in FIG. 3, the method for acquiring capability information includes:
operation 301: the first network device transmits first request information, the first request information being used to indicate required artificial intelligence-related capability information of a terminal equipment.

Optionally, operation 301 may further include: the first network device determines first request information. In one possible implementation, the first request information may include filtering configuration used to indicate artificial intelligence-related capability information of the terminal equipment. Thus, the first request information may indicate the artificial intelligence-related capability information of the terminal equipment required by the network device. The required artificial intelligence-related capability information of the terminal equipment may be artificial intelligence-related capability information of the terminal equipment required by the first network device and/or the second network device.

In another possible implementation, the first request information may include at least one of the following information 1 and information 2.

Information 1: to be ignored artificial intelligence-related capability information of a terminal equipment. The to be ignored artificial intelligence-related capability information of the terminal equipment is used to indicate artificial intelligence-related capability information of the terminal equipment that is not required. Correspondingly, the terminal equipment does not report the to be ignored artificial intelligence-related capability information of the terminal equipment, and/or reports artificial intelligence-related capability information of the terminal equipment other than the to be ignored artificial intelligence-related capability information.

Information 2: to be reported artificial intelligence-related capability information of a terminal equipment. The to be reported artificial intelligence-related capability information of the terminal equipment is used to indicate required artificial intelligence-related capability information of the terminal equipment. Correspondingly, the terminal equipment reports the to be reported artificial intelligence-related capability information.

The artificial intelligence-related capability information may include at least one piece of the following information:
1. Artificial intelligence information. For example, the artificial intelligence information may be identification information or type information of artificial intelligence, which is used to indicate support information of artificial intelligence.
2. Artificial intelligence-based feature or feature group information. For example, the artificial intelligence-based feature or feature group information may be identification information of a feature or feature group, or may be index information of a feature or feature group.
3. Functionality information. For example, the functionality information may be identification information of a functionality, or may be index information of a functionality.
4. Model information. For example, the model information may be global identification information of a model, or local identification information of a model, or index information of a model.
5. Association information of an artificial intelligence-based feature or feature group and a functionality and/or a model. For example, the association information is used to indicate an association between a feature or feature group and a functionality, and/or an association between a feature or feature group and a model, and/or an association among a feature or feature group, a functionality and a model.
6. Internal resource information of a terminal equipment. For example, the internal resource information may include storage resource information and/or computing resource information and/or remaining-battery information.
7. Manufacturer information of a terminal equipment, such as information of a manufacturer that manufactures the terminal equipment.
8. Manufacturer information of a network device, such as information of a manufacturer that manufactures the network device (such as the first network device).
9. Manufacturer information of a chip device, such as information of a manufacturer of at least one chip in the terminal equipment.
10. Configuration information of a network device. The configuration information of the network device is used to indicate configuration information of a network device supported by the terminal equipment and/or configuration information of a network device applicable to functionalities or models supported by the terminal equipment. For example, the configuration information of the network device may include at least one piece of the following information: antenna configuration of the network device (such as tilt angle information under an antenna, and configuration information, such as the number of antennas, an analog antenna, a digital antenna, and a physical antenna, etc.), beam configuration of the network device (such as beam width information, and configuration information, such as the number of beams, and beam scanning information, etc.), the coverage configuration of the network device (such as frequency point information, coverage range information, and configuration information, such as indoor, and outdoor, etc.), state information of the network device (such as whether a capacity station and coverage station enable network energy saving, and network energy-saving configuration information, etc.), and other configuration information.
11. Configuration information of a terminal equipment. The configuration information of the terminal equipment is used to indicate configuration information of the terminal equipment supported by the terminal equipment or current configuration information of the terminal equipment, and/or configuration information of a terminal equipment applicable to functionalities or models supported by the terminal equipment. For example, the configuration information of the terminal equipment may include at least one piece of the following information: speed information of the terminal equipment; calculated speed information of the terminal equipment; and a channel model between the user equipment and the network device (such as a line-of-sight (LOS) model or a non-line-of-sight (NLOS) model), or other configuration information.
12. Operational information of a functionality or model. For example, the operational information of the functionality or model may include at least one piece of the following information: inference input information, inference output information, inference accuracy information, inference confidence information, and other information.

In operation 301 of this disclosure, the first network device may transmit the first request information to the terminal equipment (such as the terminal equipment 203 in FIG. 2), or, the first network device may transmit the first request information to the second network device (such as the second network device 202 in FIG. 2), and the second network device transmits the first request information to the terminal equipment (such as the terminal equipment 203 in FIG. 2).

In one possible implementation, the first network device or the second network device may transmit the first request information to the terminal equipment via a radio resource control (RRC) message, a media access control control element (MAC CE), downlink control information (DCI), system information (SI), or other messages.

Operation 302: the first network device receives the required artificial intelligence-related capability information of the terminal equipment.

With operation 301, the terminal equipment receives the first request information, and correspondingly, according to the first request information, the terminal equipment determines the required artificial intelligence-related capability information of the terminal equipment.

In one possible implementation, the terminal equipment may transmit the required artificial intelligence-related capability information of the terminal equipment to the first network device and/or the second network device. In another possible implementation, the terminal equipment may transmit the required artificial intelligence-related capability information of the terminal equipment to the second network device, and the second network device transmits the required artificial intelligence-related capability information of the terminal equipment to the first network device.

For example, the terminal equipment may transmit the required artificial intelligence-related capability information of the terminal equipment to the first network device and/or the second network device via a radio resource control (RRC) message, a media access control control element (MAC CE), uplink control information (UCI), system information (SI), or other messages.

It should be understood that a granularity of the to be ignored/to be reported artificial intelligence-related capability information of the terminal equipment indicated by the first request information is larger than a granularity of the artificial intelligence-related capability information determined by the terminal equipment according to the first request information.

Optionally, as shown in FIG. 3, the embodiment of this disclosure further includes:
operation 300: the first network device acquires first capability information related to artificial intelligence of the terminal equipment.

The first capability information of the terminal equipment is used to indicate artificial intelligence-related capability information supported by the terminal equipment. Reference may be made to the description in operation 301 for description of the artificial intelligence-related capability information, which shall not be repeated herein any further.

It should be understood that the first network device may receive the above first capability information transmitted by at least one of the terminal equipment, a core network device and another network device.

Correspondingly, in operation 301, the first network device may determine the first request information according to the first capability information related to artificial intelligence of the terminal equipment.

As one possible implementation, the first capability information includes information shown in Table 1.1 below.

**Table 1.1**

| First capability information | Description |
|---|---|
| > feature/FG1 | For example, it is used to indicate that the terminal equipment supports a feature/FG1 |
| > feature/FG2 | For example, it is used to indicate that the terminal equipment supports a feature/FG2 |

According to the first capability information in Table 1.1, the first network device determines the first request information. Possible first request information may include information shown in Table 1.2 below.

**Table 1.2**

| First request information | Description |
|---|---|
| > Omit feature/FG1 | For example, it is used to indicate that the to be ignored artificial intelligence-related capability information of the terminal equipment is a feature or feature group 1 |
| > Include feature/FG2 | For example, it is used to indicate that the to be reported artificial intelligence-related capability information of the terminal equipment is a feature or feature group 2 |

According to the first request information, the terminal equipment determines to omit artificial intelligence-related capability information to which the feature or feature group 1 (feature/FG1) corresponds and report artificial intelligence-related capability information to which the feature or feature group 2 (feature/FG2) corresponds. Therefore, according to the first request information, the terminal equipment transmits the artificial intelligence-related capability information to which the feature or feature group 2 corresponds as the required artificial intelligence-related capability information of the terminal equipment.

As one possible example, the artificial intelligence-related capability information of the terminal equipment reported by the terminal equipment according to the first request information may include information shown in Table 1.3 below.

**Table 1.3**

| UEAIcapability | |
|---|---|
| > feature/FG2 | |
| >> at least one piece of functionality information | For example, it is used to indicate at least one piece of functionality information under the feature/FG2 |
| >> configuration information of the network device | For example, it is used to indicate configuration information of the network device applicable to the feature/FG2 or a functionality under the feature/FG2 |
| >> configuration information of the terminal equipment | For example, it is used to indicate configuration information of the terminal equipment applicable to the feature/FG2 or a functionality under feature/FG2 |

As one possible implementation, the first capability information includes information shown in Table 2.1 below.

**Table 2.1**

| First capability information | Description |
|---|---|
| > feature/FG1 | It is used to indicate that the terminal equipment supports the feature/FG1 |
| >> functionality1 | It is used to indicate that the terminal equipment supports functionality1, or is used to indicate that the terminal equipment supports functionality1 under feature/FG1 |
| >> functionality2 | It is used to indicate that the terminal equipment supports functionality2, or is used to indicate that the terminal equipment supports functionality2 under the feature/FG1 |
| > feature/FG2 | It is used to indicate that the terminal equipment supports the feature/FG2 |

According to the first capability information in Table 2.1, the first network device determines the first request information. Possible first request information may include information shown in Table 2.2 below.

**Table 2.2**

| First request information | |
|---|---|
| > omitfeature/FG2 | |
| > Includefeature/FG1 | |
| >> omitfunctionality1 | |
| >> includefunctionality2 | |

According to the first request information, the terminal equipment determines that the artificial intelligence-related capability information to which the feature or feature group 2 corresponds needs to be ignored, artificial intelligence-related capability information to which functionality 1 under the feature or feature group 1 (feature/FG1) corresponds needs to be ignored, and artificial intelligence-related capability information to which functionality 2 under the feature or feature group 1 (feature/FG1) corresponds needs to be reported. Therefore, according to the first request information, the terminal equipment transmits the artificial intelligence-related capability information to which functionality 2 under the feature or feature group 1 (feature/FG1) corresponds as the required artificial intelligence-related capability information of the terminal equipment.

As one possible example, the artificial intelligence-related capability information of the terminal equipment reported by the terminal equipment according to the first request information may include information shown in Table 2.3 below.

**Table 2.3**

| UEAIcapability | |
|---|---|
| > feature/FG1 | |
| >> functionality2 | For example, it is used to indicate functionality 2 under the feature/FG1 |
| >> configuration information of the network device | For example, it is used to indicate the configuration information of the network device applicable to functionality 2 under the feature/FG1 |
| >> configuration information of the terminal equipment | For example, it is used to indicate the configuration information of the terminal equipment applicable to functionality 2 under the feature/FG1 |

It can be seen from the examples in Tables 1.1-1.3 and Tables 2.1-2.3 that the artificial intelligence-related capability information of the terminal equipment indicated in the first request information is determined on the basis of the first capability information related to artificial intelligence of the terminal equipment. It can further be seen that the granularity of the artificial intelligence-related capability information of the terminal equipment indicated in the first request information is larger than the granularity of the artificial intelligence-related capability information reported by the terminal equipment. Therefore, with the embodiment of this disclosure, the terminal equipment may be enabled to report only the artificial intelligence-related capability information of the terminal equipment required by the network device, thereby reducing unnecessary signaling overhead.

In this disclosure, the first network device and the second network device may be identical or may be different. When the first network device and the second network device are different, one possible implementation is that the first network device is a central unit (CU) and the second network device is a distributed unit (DU) under the central unit, the distributed unit being a central unit to which a current serving cell of the terminal equipment belongs. Another possible implementation is that the first network device is a distributed unit, that is, a central unit to which a current serving cell of the terminal equipment belongs, and the second network device may be a central unit to which the distributed unit belongs. The above implementations are illustrative only, and this disclosure is not limited thereto.

The method for acquiring capability information of this disclosure shall be described below with reference to specific embodiments.

### Embodiment 1

In Embodiment 1, the first network device is, for example, a distributed unit (DU), that is, the first network device may be a distributed unit to which a current serving cell of the terminal equipment belongs, and the second network device is, for example, a central unit (CU), and the second network device may be a central unit to which the distributed unit belongs.

In Embodiment 1, the first network device determines the first request information and transmits the first request information to the second network device, and the second network device transmits the first request information to the terminal equipment. Optionally, in Embodiment 1, the first network device may further receive the first capability information of the terminal equipment transmitted by the second network device or the second capability information determined based on the first capability information.

In addition, in Embodiment 1, the terminal equipment transmits the required artificial intelligence-related capability information of the terminal equipment to the second network device according to the first request information, and the second network device transmits the required artificial intelligence-related capability information of the terminal equipment to the first network device.

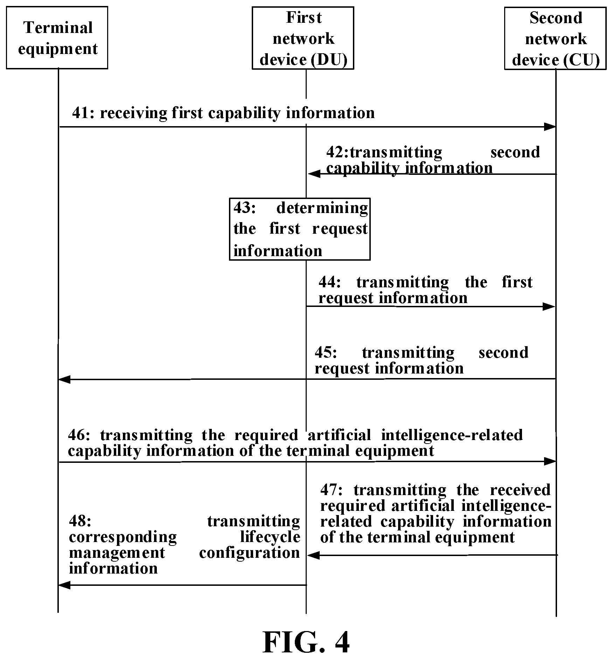

FIG. 4 is a schematic diagram of the method for acquiring capability information of Embodiment 1. As shown in FIG. 4, the method for acquiring capability information of Embodiment 1 may include the following operations:
operation 41: the second network device (CU) receives first capability information of the terminal equipment;
the first capability information of the terminal equipment is used to indicate artificial intelligence-related capability information supported by the terminal equipment; reference may be made to related description of operation 300 in FIG. 3 for description of the artificial intelligence-related capability information, which shall not be repeated herein any further; and furthermore, the first capability information of the terminal equipment may be referred to as first UE AI capability information.

In FIG. 4 description is given by taking the first capability information of the terminal equipment transmitted by the terminal equipment to the second network device as an example; however, this disclosure is not limited thereto; for example, the second network device may receive the first capability information of the terminal equipment transmitted by a core network device or another access network device;
operation 42: the second network device transmits second capability information of the terminal equipment to the first network device (DU);
the second capability information is used to indicate artificial intelligence-related capability information supported by the terminal equipment;
the second network device may determine the second capability information of the terminal equipment based on the first capability information of the terminal equipment, and the first capability information and the second capability information may be identical, or may be different;
operation 43: the first network device determines the first request information according to the received second capability information of the terminal equipment;
reference may be made to the description of operation 301 in FIG. 3 for description of the first request information, which shall not be repeated herein any further;
operation 44: the first network device transmits the first request information to the second network device;
operation 45: the second network device transmits second request information to the terminal equipment;
the second network device may determine the second request information based on the first request information, and the first request information and the second request information may be identical, or may be different;
reference may be made to the description of operation 301 in FIG. 3 for description of operation 45, which shall not be repeated herein any further;
operation 46: the terminal equipment transmits the required artificial intelligence-related capability information of the terminal equipment to the second network device;
in this disclosure, granularities of the first capability information, the second capability information, the first request information, the capability information in the second request information and the required artificial intelligence-related capability information of the terminal equipment may be identical to or different from each other pairwise;
as an example, the first capability information or the second capability information may include information on at least one AI/ML-based feature/FG supported by the terminal equipment, as shown in Table 1.1, and the first request information may be as shown in Table 1.2 above;
according to the first request information as shown, for example, in Table 1.2, the terminal equipment may transmit artificial intelligence-related capability information to which the feature/FG2 correspond(s) (i.e. the required artificial intelligence-related capability information of the terminal equipment); the required artificial intelligence-related capability information of the terminal equipment may include functionality information and/or model information under the feature/FG2 supported by the terminal equipment; in addition, the required artificial intelligence-related capability information of the terminal equipment may include other artificial intelligence-related capability information corresponding to which the feature/FG2 correspond(s);
reference may be made to the description of operation 302 in FIG. 3 for description of operation 46, which shall not be repeated herein any further;
operation 47: the second network device transmits the received required artificial intelligence-related capability information of the terminal equipment to the first network device;
optionally, operation 48: the first network device transmits corresponding lifecycle management (LCM) configuration information to the terminal equipment based on the received required artificial intelligence-related capability information of the terminal equipment.

### First variant of Embodiment 1

The first variant of Embodiment 1 differs from Embodiment 1 in that the first network device transmits the first request information to the terminal equipment.

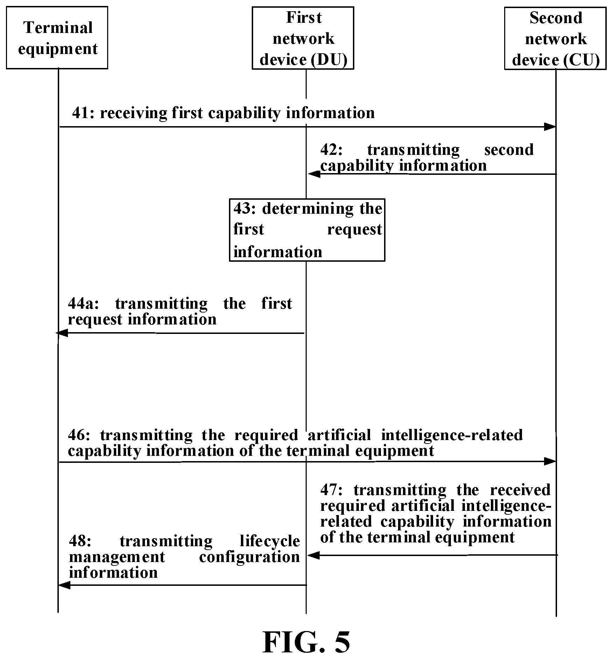

FIG. 5 is a schematic diagram of the first variant of the method for acquiring capability information of Embodiment 1. As shown in FIG. 5, operation 44a replaces operations 44 and 45.

Operation 44a: the first network device transmits the first request information to the terminal equipment.

In addition, in FIG. 5, reference may be made to Embodiment 1 for descriptions of operations 41, 42, 43, 46, 47 and 48.

### Second variant of Embodiment 1

The second variant of Embodiment 1 differs from Embodiment 1 in that the terminal equipment transmits the required artificial intelligence-related capability information of the terminal equipment to the first network device.

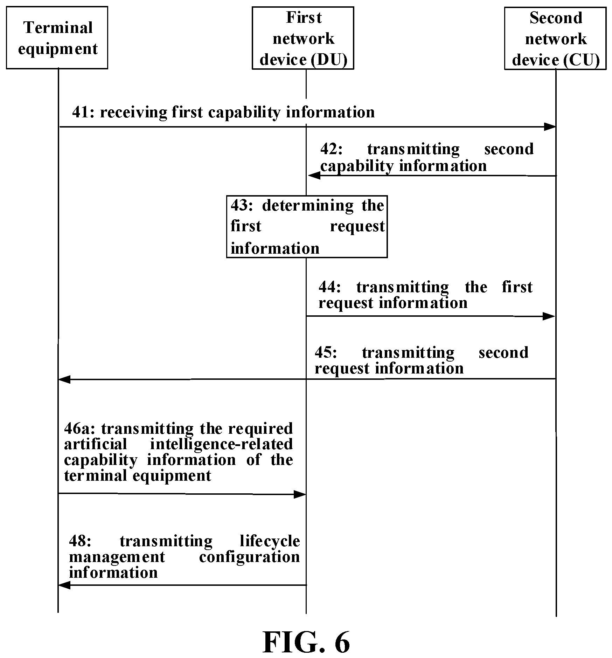

FIG. 6 is a schematic diagram of the second variant of the method for acquiring capability information of Embodiment 1. As shown in FIG. 6, operation 46a replaces operations 46 and 47.

Operation 46a: the terminal equipment transmit the required artificial intelligence-related capability information of the terminal equipment to the first network device.

In addition, in FIG. 6, reference may be made to Embodiment 1 for descriptions of operations 41, 42, 43, 44, 45 and 48.

### Third variant of Embodiment 1

The third variant of Embodiment 1 differs from Embodiment 1 in that the first network device transmits the first request information to the terminal equipment, and the terminal equipment transmits the required artificial intelligence-related capability information of the terminal equipment to the first network device.

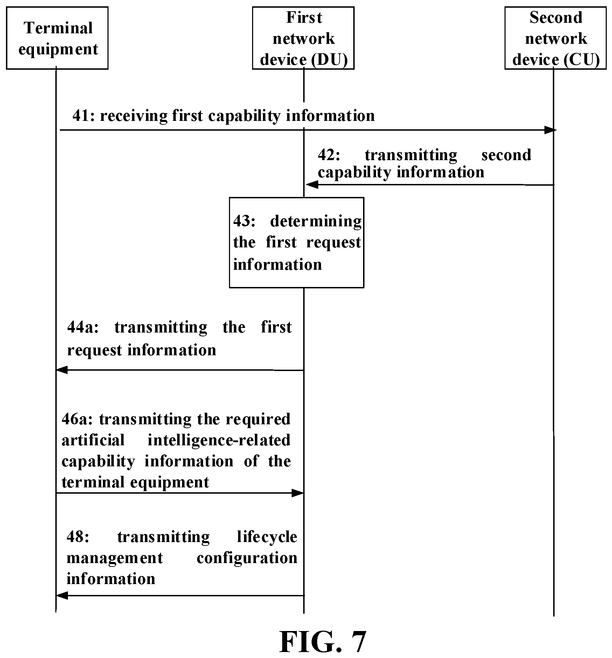

FIG. 7 is a schematic diagram of the third variant of the method for acquiring capability information of Embodiment 1. As shown in FIG. 7, operation 44a replaces operations 44 and 45, and operation 46a replaces operations 46 and 47.

Operation 44a: the first network device transmits the first request information to the terminal equipment; and
operation 46a: the terminal equipment transmits the required artificial intelligence-related capability information of the terminal equipment to the first network device.

In addition, in FIG. 7, reference may be made to Embodiment 1 for descriptions of operations 41, 42, 43 and 48.

### Embodiment 2

In Embodiment 2, the first network device is a central unit (CU), and the second network device may be a distributed unit (DU) under the central unit, the distributed unit is a distributed unit to which a current serving cell of the terminal equipment belongs.

In Embodiment 2, the first network device determines the first request information, and transmits the first request information to the terminal equipment.

In addition, in Embodiment 2, the terminal equipment transmits the required artificial intelligence-related capability information of the terminal equipment to the first network device according to the first request information, and the first network device transmits the required artificial intelligence-related capability information of the terminal equipment to the second network device.

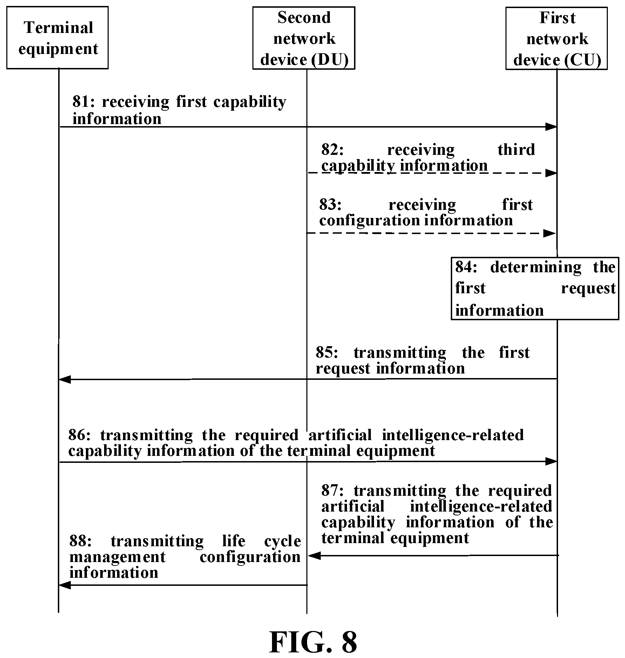

FIG. 8 is a schematic diagram of the method for acquiring capability information of Embodiment 2. As shown in FIG. 8, the method for acquiring capability information of Embodiment 2 may include the following operations:
operation 81: the first network device (CU) receives first capability information of the terminal equipment;
reference may be made to the description of operation 41 in Embodiment 1 for description of operation 81, which shall not be repeated herein any further;
operation 82: optionally, the first network device receives third capability information transmitted by the second network device (DU);
wherein the third capability information may be artificial intelligence-related capability information supported by the second network device and/or a cell under the second network device, and may be referred to as first DU AI capability information;
operation 83: optionally, the first network device receives first configuration information transmitted by the second network device;
wherein the first configuration information is used to indicate artificial intelligence-related configuration information expected or required by the second network device and/or a cell under the second network device, and may be referred to as AI configuration information preferred by a DU;
in some examples, the artificial intelligence-related configuration indicated by the first configuration information may be a subset or a full set of the third capability information;
it should be noted that operations 82 and 83 are optional, that is, the method shown in FIG. 8 may include operation 82 and/or operation 83, or the method shown in FIG. 8 may not include operation 82 and operation 83;
operation 84: the first network device determines the first request information;
in operation 84, the first network device determines the first request information at least according to the first capability information;
for example, when the method does not include operations 82 and 83, the first network device determines the first request information according to the first capability information;
for another example, when the method includes operation 82, the first network device determines the first request information according to the first capability information, or determines the first request information according to the first capability information and the third capability information;
for a further example, when the method includes operation 83, the first network device determines the first request information according to the first capability information, or determines the first request information according to the first capability information and the first configuration information;
for still another example, when the method includes operations 82 and 83, the first network device determines the first request information according to the first capability information, or determines the first request information according to one of the third capability information and the first configuration information together with the first capability information;
reference may be made to the description of operation 301 in FIG. 3 for description of the first request information, which shall not be repeated herein any further;
operation 85: the first network device transmits the first request information to the terminal equipment;
for example, the first network device may transmit the first request information to the terminal equipment via a radio resource control (RRC) message, or system information (SI), or other messages;
reference may be made to the description of operation 301 in FIG. 3 for description of operation 85, which shall not be repeated herein any further;
operation 86: the terminal equipment transmits the required artificial intelligence-related capability information of the terminal equipment to the first network device;
reference may be made to the description of operation 302 in FIG. 3 for description of operation 86, which shall not be repeated herein any further;
operation 87: the first network device transmits the required artificial intelligence-related capability information of the terminal equipment to the second network device;
in Embodiment 2 of this disclosure, granularities of the first capability information, the second capability information, the third capability information, the first configuration information and the required artificial intelligence-related capability information of the terminal equipment may be identical to or different from each other pairwise;
as an example, the first capability information may include information on at least one AI/ML-based feature/FG supported by the terminal equipment, and has a granularity as shown in Table 1.1 above, and a granularity of the artificial intelligence-related capability information indicated by the first request information may be as shown in Table 1.2 above. The third capability information may include information on at least one AI/ML-based feature/FG supported by the second network device or a cell under the second network device, and has a granularity as shown in Table 1.1 or Table 1. 3 above. The first configuration information is used to indicate artificial intelligence-related capability information required or expected by the second network device or a cell under the second network device, and has a granularity as shown in Table 1.2 above;
according to the first request information as shown, for example, in Table 1.2, the terminal equipment may transmit artificial intelligence-related capability information to which the feature/FG2 correspond(s) (i.e. the required artificial intelligence-related capability information of the terminal equipment), wherein the required artificial intelligence-related capability information of the terminal equipment may include functionality information and/or model information under the feature/FG2 supported by the terminal equipment; in addition, the required artificial intelligence-related capability information of the terminal equipment may include other artificial intelligence-related capability information to which the feature/FG2 correspond(s);
optionally, operation 88: the second network device transmits corresponding life cycle management (LCM) configuration information to the terminal equipment based on the required artificial intelligence-related capability information of the terminal equipment.

### First variant of Embodiment 2

The first variant of Embodiment 2 differs from Embodiment 2 in that the first network device transmits the first request information to the second network device, and the second network device transmits second request information determined according to the first request information to the terminal equipment.

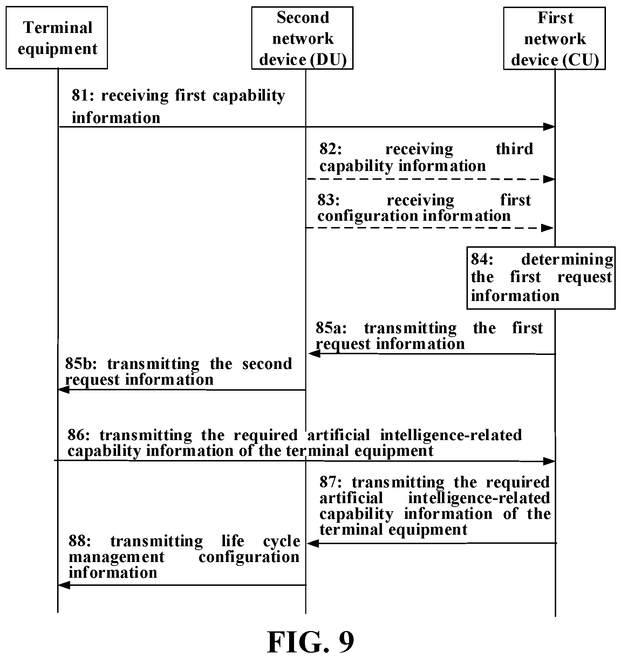

FIG. 9 is a schematic diagram of the first variant of the method for acquiring capability information of Embodiment 2. As shown in FIG. 9, operation 85a and operation 85b replace operation 85.

Operation 85a: the first network device transmitting the first request information to the second network device;
operation 85b: the second network device transmits second request information determined based on the first request information to the terminal equipment.

In operation 85b, the second network device may transmit the second request information to the terminal equipment via system information, or a media access control control element (MAC CE), or downlink control information (DCI), or other messages.

In this disclosure, the second request information and the first request information may be identical, or may be different.

In addition, in FIG. 9, reference may be made to Embodiment 2 for descriptions of operations 81, 82, 83, 84, 86, 87 and 88.

In operation 86 of the first variant of Embodiment 2, the terminal equipment may transmit the required artificial intelligence-related capability information of the terminal equipment based on the received second request information.

### Second variant of Embodiment 2

The second variant of Embodiment 2 differs from Embodiment 2 in that the terminal equipment transmits the required artificial intelligence-related capability information of the terminal equipment to the second network device.

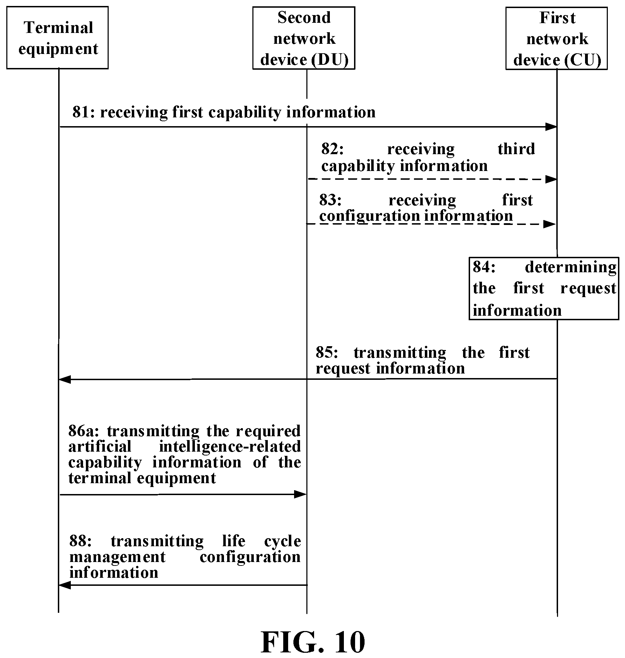

FIG. 10 is a schematic diagram of the second variant of the method for acquiring capability information of Embodiment 2. As shown in FIG. 10, operation 86a replaces operation 87.

Operation 86a: the terminal equipment transmits the required artificial intelligence-related capability information of the terminal equipment to the second network device. Reference may be made to the description of operation 302 in FIG. 3 for description of operation 86a, which shall not be repeated herein any further.

In addition, in FIG. 10, reference may be made to Embodiment 2 for descriptions of operations 81, 82, 83, 84, 85 and 88.

### Third variant of Embodiment 2

The third variant of Embodiment 2 differs from Embodiment 2 in that the first network device transmits the first request information to the second network device, the second network device transmits second request information determined according to the first request information to the terminal equipment, and the terminal equipment transmits the required artificial intelligence-related capability information of the terminal equipment to the second network device.

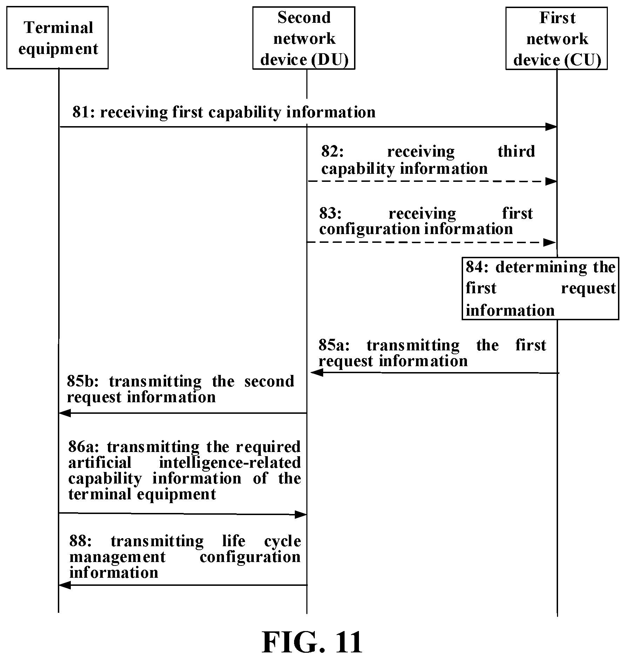

FIG. 11 is a schematic diagram of the third variant of the method for acquiring capability information of Embodiment 2. As shown in FIG. 11, operation 85a and operation 85b replace operation 85, and operation 86a replaces operations 86 and 87.

Operation 85a: the first network device transmits the first request information to the second network device;
operation 85b: the second network device transmits second request information determined according to the first request information to the terminal equipment;
operation 86a: the terminal equipment transmits the required artificial intelligence-related capability information of the terminal equipment to the second network device.

In operation 86a, the terminal equipment may transmit the required artificial intelligence-related capability information of the terminal equipment based on the received second request information.

In addition, in FIG. 11, reference may be made to Embodiment 2 for descriptions of operations 81, 82, 83 and 88.

According to the embodiment of the first aspect of this disclosure,based on the first request information of the network device, the terminal equipment transmits the artificial intelligence-related capability information of the terminal equipment required by the network device, thereby avoiding unnecessary reporting of capability information, and reducing unnecessary signaling overhead.

### Embodiment of a second aspect

The embodiment of the second aspect of this disclosure provides a method for acquiring capability information, which is used to solve technical problems identical or similar to those solved by the embodiment of the first aspect. This method is applicable to a second network device, such as the second network device 202 shown in FIG. 2. This method corresponds to the embodiment of the first aspect, and reference may be made to the description in the embodiment of the first aspect for parts in the embodiment of the second aspect identical to those in the embodiment of the first aspect, which shall not be repeated herein any further.

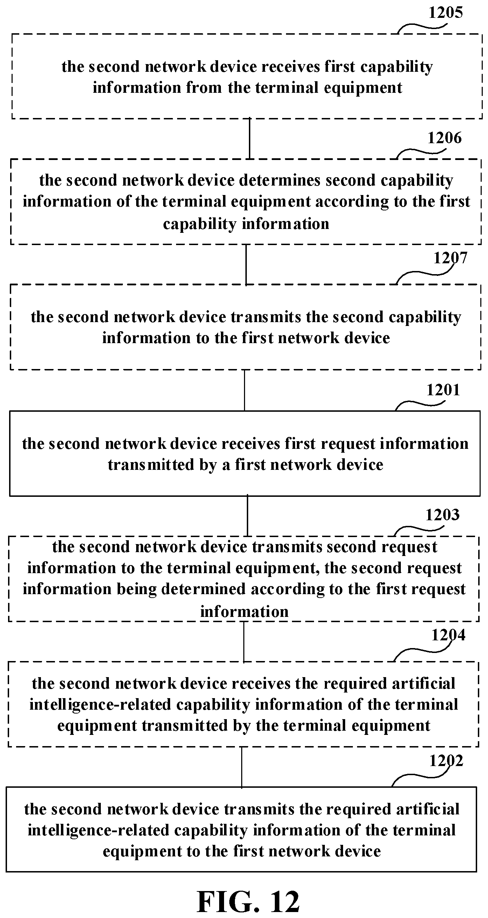

FIG. 12 is a schematic diagram of the method for acquiring capability information of the embodiment of the second aspect of this disclosure. As shown in FIG. 12, the method for acquiring capability information includes:
operation 1201: the second network device receives first request information transmitted by a first network device, the first request information being used to indicate artificial intelligence-related capability information of a terminal equipment required by the first network device; and
operation 1202: the second network device transmits the required artificial intelligence-related capability information of the terminal equipment to the first network device.

Reference may be made to related description of the embodiment of the first aspect for description of the first request information and the artificial intelligence-related capability information.

As shown in FIG. 12, the method further includes:
operation 1203: the second network device transmits second request information to the terminal equipment, the second request information being determined according to the first request information; and
operation 1204: the second network device receives the required artificial intelligence-related capability information of the terminal equipment transmitted by the terminal equipment.

As shown in FIG. 12, the method further includes:
operation 1205: the second network device receives first capability information from the terminal equipment, the first capability information being used to indicate artificial intelligence-related capability information supported by the terminal equipment;
operation 1206: the second network device determines second capability information of the terminal equipment according to the first capability information; and
operation 1207: the second network device transmits the second capability information to the first network device.

The second capability information is used to indicate artificial intelligence-related capability information supported by the terminal equipment.

### Embodiment of a third aspect

The embodiment of the third aspect of this disclosure provides a method for acquiring capability information, applicable to a terminal equipment, such as the terminal equipment 203 shown in FIG. 2. This method corresponds to the embodiment of the first aspect, and reference may be made to the description in the embodiment of the first aspect for parts in the embodiment of the third aspect identical to those in the embodiment of the first aspect, which shall not be repeated herein any further.

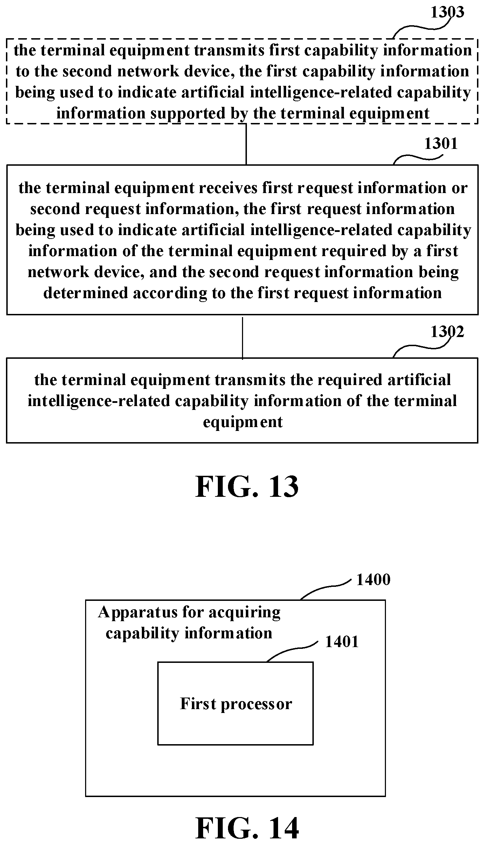

FIG. 13 is a schematic diagram of the method for acquiring capability information of the embodiment of the third aspect of this disclosure. As shown in FIG. 13, the method includes:
operation 1301: the terminal equipment receives first request information or second request information, the first request information being used to indicate artificial intelligence-related capability information of the terminal equipment required by a first network device, and the second request information being determined according to the first request information; and
operation 1302: the terminal equipment transmits the required artificial intelligence-related capability information of the terminal equipment.

Reference may be made to related description of the embodiment of the first aspect for the first request information and artificial intelligence-related capability information.

In at least one embodiment, the terminal equipment receives the second request information from a second network device, or, the terminal equipment receives the first request information from the first network device, and the terminal equipment transmits the required artificial intelligence-related capability information of the terminal equipment to the second network device.

As shown in FIG. 13, the method further includes:
operation 1303: the terminal equipment transmits first capability information to the second network device, the first capability information being used to indicate artificial intelligence-related capability information supported by the terminal equipment.

### Embodiment of a fourth aspect

The embodiment of the fourth aspect of this disclosure provides an apparatus for acquiring capability information. The apparatus is applicable to a first network device, and corresponds to the embodiment of the first aspect.

FIG. 14 is a schematic diagram of the apparatus for acquiring capability information of the embodiment of the fourth aspect. As shown in FIG. 14, the apparatus 1400 for acquiring capability information includes a first processor 1401.

The first processor 1401 controls the first network to perform the following operations:
transmitting a first request message, the first request message being used to indicate required artificial intelligence-related capability information of a terminal equipment; and
receiving the required artificial intelligence-related capability information of the terminal equipment.

Reference may be made to related description of the embodiment of the first aspect for description of the first request information and the artificial intelligence-related capability information.

In at least one embodiment, the first network device transmits the first request information to a second network device.

In at least one embodiment, the first processor 1401 further controls the first network device to perform the following operations:
receiving second capability information of the terminal equipment transmitted by the second network device, the second capability information being used to indicate artificial intelligence-related capability information supported by the terminal equipment.

In at least one embodiment, the first network device determines the first request information according to the second capability information.

In at least one embodiment, the second capability information is determined by the second network device according to first capability information of the terminal equipment, the first capability information being used to indicate the artificial intelligence-related capability information supported by the terminal equipment.

In at least one embodiment,
the first network device receives the required artificial intelligence-related capability information of the terminal equipment transmitted by the second network device.

In at least one embodiment, the first network device transmits the first request information to the terminal equipment.

In at least one embodiment,
the first network device receives the required artificial intelligence-related capability information of the terminal equipment transmitted by the terminal equipment.

### Embodiment of a fifth aspect

The embodiment of the fifth aspect of this disclosure provides an apparatus for acquiring capability information. The apparatus is applicable to a second network device, and corresponds to the embodiment of the second aspect.

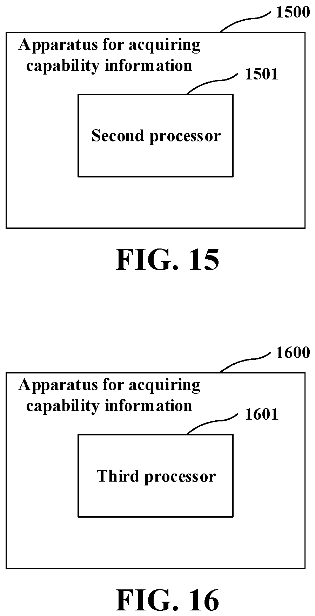

FIG. 15 is a schematic diagram of the apparatus for acquiring capability information of the embodiment of the fifth aspect. As shown in FIG. 15, the apparatus 1500 for acquiring capability information includes a second processor 1501.

The second processor 1501 controls the second network device to perform the following operations:
receiving first request information transmitted by the first network device, the first request information being used to indicate artificial intelligence-related capability information of a terminal equipment required by the first network device; and
transmitting the required artificial intelligence-related capability information of the terminal equipment to the first network device.

Reference may be made to related description of the embodiment of the first aspect for description of the first request information and the artificial intelligence-related capability information.

In at least one embodiment, the second processor further controls the second network device to perform the following operations:
transmitting a second request message to the terminal equipment, the second request message being determined according to the first request message; and
receiving the required artificial intelligence-related capability information of a terminal equipment transmitted by the terminal equipment.

In at least one embodiment, the second processor further controls the second network device to perform the following operation:
receiving first capability information from the terminal equipment, the first capability information being used to indicate artificial intelligence-related capability information supported by the terminal equipment.

In at least one embodiment, the second processor further controls the second network device to perform the following operations:
determining second capability information of the terminal equipment according to the first capability information; and
transmitting the second capability information to the first network device,
wherein the second capability information is used to indicate the artificial intelligence-related capability information supported by the terminal equipment.

### Embodiment of a sixth aspect

The embodiment of the sixth aspect of this disclosure provides an apparatus for acquiring capability information. The apparatus is applicable to a terminal equipment, and corresponds to the embodiment of the third aspect.

FIG. 16 is a schematic diagram of the apparatus for acquiring capability information of the embodiment of the sixth aspect. As shown in FIG. 16, the apparatus 1600 for acquiring capability information includes a third processor 1601.

The third processor 1601 controls the terminal equipment to perform the following operations:
receiving first request information or second request information, the first request information being used to indicate artificial intelligence-related capability information of the terminal equipment required by the first network device, and the second request information being determined according to the first request information; and
transmitting the required artificial intelligence-related capability information of the terminal equipment.

Reference may be made to-related description of the embodiment of the first aspect for description of the first request information and the artificial intelligence-related capability information.

In at least one embodiment, the terminal equipment receives the second request information from a second network device, or, the terminal equipment receives the first request information from the first network device.

In at least one embodiment, the terminal equipment transmits the required artificial intelligence-related capability information of the terminal equipment to the second network device.

In at least one embodiment, the third processor further controls the terminal equipment to perform the following operation:
transmitting first capability information to the second network device, the first capability information being used to indicate artificial intelligence-related capability information supported by the terminal equipment.

### Embodiment of a seventh aspect

The embodiment of the seventh aspect of this disclosure provides a communication system, including a first network device, a second network device and a terminal equipment.

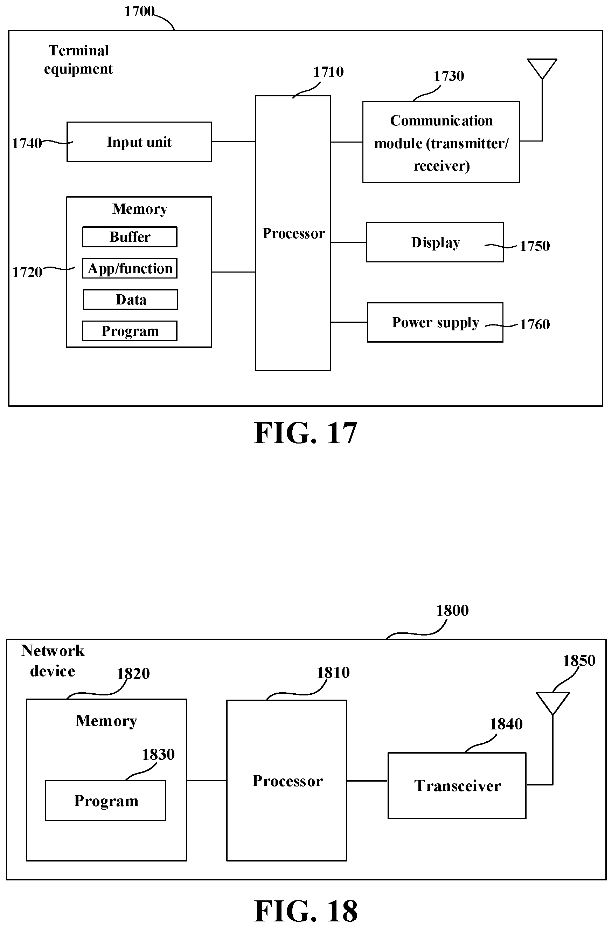

FIG. 17 is a schematic diagram of the terminal equipment of the embodiment of the seventh aspect. As shown in FIG. 17, the terminal equipment 1700 (such as corresponding to the terminal equipment 203 in FIG. 2) may include a processor 1710 and a memory 1720, the memory 1720 storing data and a program and being coupled to the processor 1710. It should be noted that this figure is illustrative only, and other types of structures may also be used, so as to supplement or replace this structure and achieve a telecommunications function or other functions.

For example, the processor 1710 may be configured to execute a program to carry out the method in the embodiment of the third aspect.

As shown in FIG. 17, the terminal equipment 1700 may further include a communication module 1730, an input unit 1740, a display 1750, and a power supply 1760; wherein functions of the above components are similar to those in the prior art, which shall not be described herein any further. It should be noted that the terminal equipment 1700 does not necessarily include all the parts shown in FIG. 17, and the above components are not necessary. Furthermore, the terminal equipment 1700 may include parts not shown in FIG. 17, and the prior art may be referred to.

FIG. 18 is a schematic diagram of the network device of the embodiment of the seventh aspect. The network device may execute functions of a first network device or a second network device. As shown in FIG. 18, the network device 1800 (such as corresponding to the first network device 201 or the second network device 202 in FIG. 2) may include a processor 1810 (such as a central processing unit (CPU)) and a memory 1820, the memory 1820 being coupled to the processor 1810. Wherein, the memory 1820 may store various data, and furthermore, it may store a program 1830 for information processing, and execute the program under control of the processor 1818.

For example, the processor 1818 may be configured to execute a program to carry out the method in the embodiment of the second aspect.

Furthermore, as shown in FIG. 18, the network device 1800 may include a transceiver 1840, and an antenna 1850, etc. Wherein, functions of the above components are similar to those in the prior art, and shall not be described herein any further. It should be noted that the network device 1800 does not necessarily include all the parts shown in FIG. 18, and furthermore, the network device 1800 may include parts not shown in FIG. 18, and the prior art may be referred to.

An embodiment of this disclosure provides a computer readable program code, which, when executed in a network device, will cause the network device to carry out the method(s) as described in the embodiment(s) of the first aspect and/or the second aspect.

An embodiment of this disclosure provides a computer readable medium, including a computer readable program code, which will cause a network device to carry out the method(s) as described in the embodiment(s) of the first aspect and/or the second aspect.

An embodiment of this disclosure provides a computer readable program code, which, when executed in a terminal equipment, will cause the terminal equipment to carry out the method(s) as described in the embodiment(s) of the third aspect and/or the fourth aspect.

An embodiment of this disclosure provides a computer readable medium, including a computer readable program code, which will cause a terminal equipment to carry out the method(s) as described in the embodiment(s) of the third aspect and/or the fourth aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations containing the above embodiments, following supplements are further disclosed.
1. A method for acquiring capability information, applicable to a first network device, characterized in that the method includes:
   transmitting first request information by the first network device, the first request information being used to indicate required artificial intelligence-related capability information of a terminal equipment; and
   receiving the required artificial intelligence-related capability information of the terminal equipment by the first network device.
2. The method according to supplement 1, wherein,
   the first request information comprises at least one piece of the following information:
   to be ignored artificial intelligence-related capability information of a terminal equipment; and
   to be reported artificial intelligence-related capability information of a terminal equipment.
3. The method according to supplement 1, wherein,
   the artificial intelligence-related capability information includes at least one piece of the following information:
   feature or feature group information based on artificial intelligence;
   functionality information;
   model information;
   internal resource information of a terminal equipment;
   manufacturer information of a terminal equipment;
   manufacturer information of a network device;
   manufacturer information of a chip device;
   configuration information of a network device;
   configuration information of a terminal equipment; or
   operational information of a functionality or model.
4. The method according to supplement 1, wherein,
   the first network device transmits the first request information to the second network device.
5. The method according to supplement 4, wherein the method further includes:
   receiving, by the first network device, second capability information of the terminal equipment transmitted by the second network device, the second capability information being used to indicate artificial intelligence-related capability information supported by the terminal equipment.
6. The method according to supplement 5, wherein,
   the first network device determines the first request information according to the second capability information.
7. The method according to supplement 5, wherein,
   the second capability information is determined by the second network device according to first capability information of the terminal equipment, the first capability information being used to indicate the artificial intelligence-related capability information supported by the terminal equipment.
8. The method according to supplement 4, wherein,
   the first network device receives the required artificial intelligence-related capability information of the terminal equipment transmitted by the second network device.
9. The method according to any one of supplements 1-3, wherein,
   the first network device transmits the first request information to the terminal equipment.
10. The method according to supplement 9, wherein,
   the first network device receives the required artificial intelligence-related capability information of the terminal equipment transmitted by the terminal equipment.

## Claims

1. An apparatus for acquiring capability information, applicable to a first network device, **characterized in that** the apparatus comprises a first processor, the first processor controlling the first network device to perform the following operations:
transmitting first request information, the first request information being used to indicate required artificial intelligence-related capability information of a terminal equipment; and
receiving the required artificial intelligence-related capability information of the terminal equipment.

2. The apparatus according to claim 1, wherein,
the first request information comprises at least one piece of the following information:
to be ignored artificial intelligence-related capability information of a terminal equipment; and
to be reported artificial intelligence-related capability information of a terminal equipment.

3. The apparatus according to claim 1, wherein,
the artificial intelligence-related capability information comprises at least one piece of the following information:
feature or feature group information based on artificial intelligence;
functionality information;
model information;
internal resource information of a terminal equipment;
manufacturer information of a terminal equipment;
manufacturer information of a network device;
manufacturer information of a chip device;
configuration information of a network device;
configuration information of a terminal equipment; or operational information of a functionality or model.

4. The apparatus according to claim 1, wherein,
the first network device transmits the first request information to a second network device.

5. The apparatus according to claim 4, wherein the first processor further controls the first network device to perform the following operation:
receiving second capability information of the terminal equipment transmitted by the second network device, the second capability information being used to indicate artificial intelligence-related capability information supported by the terminal equipment.

6. The apparatus according to claim 5, wherein,
the first network device determines the first request information according to the second capability information.

7. The apparatus according to claim 5, wherein,
the second capability information is determined by the second network device according to first capability information of the terminal equipment, the first capability information being used to indicate artificial intelligence-related capability information supported by the terminal equipment.

8. The apparatus according to claim 4, wherein,
the first network device receives the required artificial intelligence-related capability information of the terminal equipment transmitted by the second network device.

9. The apparatus according to claim 1, wherein,
the first network device transmits the first request information to the terminal equipment.

10. The apparatus according to claim 9, wherein,
the first network device receives the required artificial intelligence-related capability information of the terminal equipment transmitted by the terminal equipment.

11. An apparatus for acquiring capability information, applicable to a second network device, **characterized in that** the apparatus comprises a second processor, the second processor controlling the second network device to perform the following operations:
receiving first request information transmitted by the first network device, the first request information being used to indicate artificial intelligence-related capability information of a terminal equipment required by the first network device; and
transmitting the artificial intelligence-related capability information of a terminal equipment as required to the first network device.

12. The apparatus according to claim 11, wherein,
the first request information comprises at least one piece of the following information:
to be ignored artificial intelligence-related capability information of a terminal equipment; and
to be reported artificial intelligence-related capability information of a terminal equipment.

13. The apparatus according to claim 11, wherein,
the artificial intelligence-related capability information comprises at least one piece of the following information:
feature or feature group information based on artificial intelligence;
functionality information;
model information;
internal resource information of a terminal equipment;
manufacturer information of a terminal equipment;
manufacturer information of a network device;
manufacturer information of a chip device;
configuration information of a network device;
configuration information of a terminal equipment; or
operational information of a functionality or model.

14. The apparatus according to claim 11, wherein the second processor further controls the second network device to perform the following operations:
transmitting a second request message to the terminal equipment, the second request message being determined according to the first request message; and
receiving the artificial intelligence-related capability information of a terminal equipment as required transmitted by the terminal equipment.

15. The apparatus according to claim 11, wherein the second processor further controls the second network device to perform the following operation:
receiving first capability information from the terminal equipment, the first capability information being used to indicate artificial intelligence-related capability information supported by the terminal equipment.

16. The apparatus according to claim 15, wherein the second processor further controls the second network device to perform the following operations:
determining second capability information of the terminal equipment according to the first capability information; and
transmitting the second capability information to the first network device,
the second capability information being used to indicate the artificial intelligence-related capability information supported by the terminal equipment.

17. An apparatus for transmitting capability information, applicable to a terminal equipment, **characterized in that** the apparatus comprises a third processor, the third processor controlling the terminal equipment to perform the following operations:
receiving first request information or second request information, the first request information being used to indicate artificial intelligence-related capability information of the terminal equipment required by the first network device, and the second request information being determined according to the first request information; and
transmitting the artificial intelligence-related capability information of the terminal equipment as required.

18. The apparatus according to claim 17, wherein,
the terminal equipment receives the second request information from a second network device, or, the terminal equipment receives the first request information from the first network device.

19. The apparatus according to claim 18, wherein,
the terminal equipment transmits the artificial intelligence-related capability information of the terminal equipment as required to the second network device.

20. The apparatus according to claim 18, wherein the third processor further controls the terminal equipment to perform the following operation:
transmitting first capability information to the second network device, the first capability information being used to indicate artificial intelligence-related capability information supported by the terminal equipment.
